# EUROPÄISCHE PATENTSCHRIFT

(11) **EP 3 521 796 B1**
(45) Veröffentlichungstag und Bekanntmachung des Hinweises auf die Patenterteilung: **27.01.2021**
(21) Anmeldenummer: 19155003.7
(22) Anmeldetag: 01.02.2019
(51) Int. Cl.: G01M 17/02, G01B 11/16

(54) **VERFAHREN ZUR INTERFEROMETRISCHEN PRÜFUNG EINES REIFENS**
METHOD FOR THE INTERFEROMETRIC TESTING OF A TIRE
PROCEDE DE TEST INTERFEROMETRIQUE D'UN PNEU

(30) Priorität: 01.02.2018 CN 201810103960
(43) Veröffentlichungstag der Anmeldung: 07.08.2019
(73) Patentinhaber: Carl Zeiss Optotechnik GmbH, 83115 Neubeuern (DE)
(72) Erfinder: Sun, Junli, 80807 München (DE); Sun, Xu, Beijing, 100029 (CN)
(74) Vertreter: Behr, Wolfgang

(56) Entgegenhaltungen:
- GB-A- 2 340 223
- US-A1- 2007 121 121

## Beschreibung

Die vorliegende Erfindung betrifft ein Verfahren zur interferometrischen Prüfung eines Reifens in einer Druckkammer eines Reifenprüfgerätes, sowie ein entsprechendes Reifenprüfgerät. Insbesondere kann ein shearographisches Prüfverfahren zum Einsatz kommen.

Mit Verfahren zur interferometrischen Prüfung eines Reifens in einer Druckkammer können im Inneren des Reifens liegende Defekte wie beispielsweise Lufteinschlüsse erkannt werden. Hierfür wird der Druck in der Druckkammer des Reifenprüfgerätes verändert, und die durch die Druckänderung erzeugte Verformung des Reifens interferometrisch gemessen. Hierfür werden bei mindestens zwei unterschiedlichen Druckzuständen Phasenbilder der zu überprüfenden Oberfläche des Reifens erzeugt, und aus den Phasenbildern ein Phasendifferenzbild gebildet, welches die Verformung des Reifens zeigt.

Bei der interferometrischen Prüfung kann es sich um eine holographische oder eine shearographische Prüfung handeln. Bevorzugt wird jedoch die Shearographie eingesetzt, da diese gegenüber der Holographie den entscheidenden Vorteil hat, dass sie auch unter Industriebedingungen und eine Industrieumgebung eingesetzt werden kann.

Allerdings bestehen bei der interferometrischen Prüfung von Reifen auch bei Einsatz der Shearographie weiterhin zwei wesentliche Störfaktoren: Dies ist unter anderem eine durch eine vorangegangene Deformation hervorgerufene Ganzkörperverformung des Reifens während der Prüfung, eine durch eine vorangegangene räumliche begrenzte Deformation hervorgerufene lokale Verformung des Reifens während der Prüfung, und Schwingungen des Reifens während der Prüfung. Die Ganzkörperverformung des Reifens beruht üblicherweise auf Verformungen des Reifens, welche beispielsweise durch das Einbringen des Reifens in das Reifenprüfgerät erzeugt wurden, und der während der Prüfung erfolgenden Relaxation des Reifens zurück in seinen Ausgangszustand. Auch lokale Verformungen des Reifens beruhen üblicherweise auf vorangegangenen loklane Deformationen, beispielsweise in Form von Druckstellen, welche während der Prüfung relaxieren. Schwingungen des Reifens können durch verschiedenste Effekte angeregt werden, beispielsweise durch Luftströmungen bei der Veränderung des Drucks oder externe Schwingungsanreger.

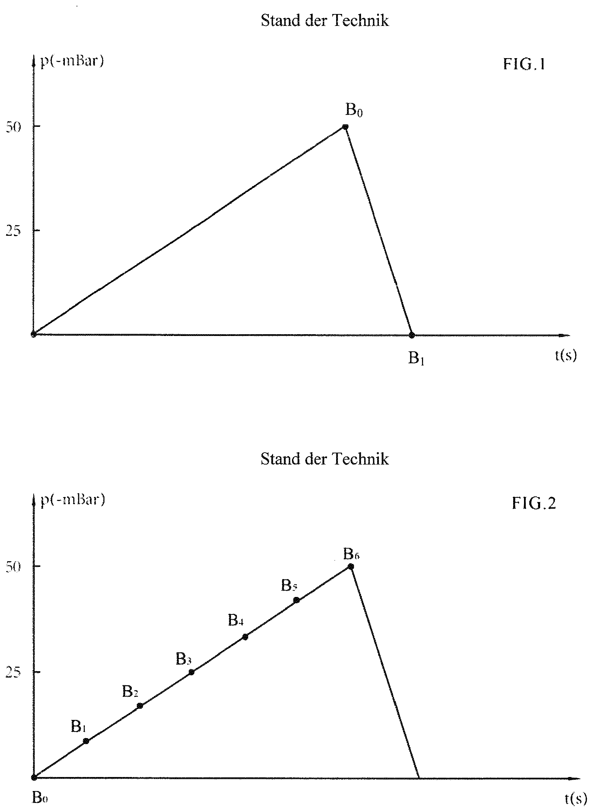

Fig. 1 zeigt ein erstes aus dem Stand der Technik bekanntes Messprotokoll. Hierbei wird zunächst in einer ersten Phase ein Unterdruck erzeugt, und dann durch eine schnelle Belüftung der Druckkammer in einer zweiten Phase der Unterdruck wieder abgelassen. Bei maximalem Unterdruck wird ein erstes Phasenbild B₀ erzeugt, und bei Rückkehr in den Ausgangsdruck nach Ablassen des Unterdrucks ein zweites Phasenbild B₁. Aus den beiden Phasenbildern B₀ und B₁ wird dann ein Phasendifferenzbild D = B₁ - B₀ erzeugt. Dieses Vorgehen ist gegenüber Schwingungen des Reifens relativ unempfindlich. Ganzkörperverformungen wirken sich hier jedoch sehr problematisch aus. Insbesondere können diese erheblich größer sein als die eigentlich zu untersuchenden Vorformungen durch Defekte des Reifens, und/oder zu einer Dekohärenz zwischen den Phasenbildern führen können.

Aus der Druckschrift DE 10101057 A1 ist daher ein weiteres Verfahren zur shearographischen Reifenprüfung bekannt, bei welchem während der Verformung des Reifens eine Folge von Phasenbildern des Objekts aufgenommen wird. Daraufhin wird aus jeweils zwei aufeinanderfolgenden Phasenbildern ein Teil-Phasendifferenzbild erzeugt, und die einzelnen Teil-Phasendifferenzbilder zu einem Gesamt-Phasendifferenzbild aufsummiert. Ein Ausführungsbeispiel eines solchen Verfahrens ist in Fig. 2 gezeigt. Dabei wird während der Erhöhung des Unterdrucks in der Druckkammer des Reifenprüfgerätes eine Folge von Phasenbildern B₀ bis B₆ erzeugt. Zwischen benachbarten Phasenbildern Bᵢ und Bᵢ₊₁ wird jeweils ein Teil-Phasendifferenzbild Dᵢ = Bᵢ₊₁ - Bᵢ gebildet, und dann alle Teil-Phasendifferenzbilder Dᵢ zu einem Gesamt-Phasendifferenzbild aufsummiert.

Durch die Summierung mehrerer Phasendifferenzbilder ist das Messverfahren gegenüber Ganzkörperverformungen relativ unempfindlich. Insbesondere bleibt die Kohärenz zwischen benachbarten Phasenbildern erhalten. Weiterhin kann die Ganzkörperverformung aus dem Gesamt-Phasendifferenzbild eliminiert werden. Allerdings werden bei diesem Vorgehen die durch Schwingungen hervorgerufenen Störungen verstärkt. Hierdurch werden die Reifenprüfgeräte anfälliger, die Gesamt-Phasendifferenzbilder verrauscht und die Prüfzeiten verlängert.

Druckschrift US 2007/121121 A1 zeigt ein Verfahren zur interferometrischen Erfassung der Verformung von Objekten, bei welchem während der Verformung des Objekts eine Folge von Bildern des Objekts mit einem Meßverfahren aufgenommen wird. Aus den Bildern werden Phasenbilder ermittelt. Es wird jeweils die Differenz zwischen dem aktuellen Phasenbild und dem Phasenbild eines Anfangszustands gebildet. Diese Differenzen werden auf einem Bildschirmanzeigegerät dargestellt und/oder für eine spätere Darstellung gespeichert.

Druckschrift GB 2 340 223 A zeigt eine Vorrichtung zum Prüfen oder Testen einer Probe unter Verwendung von Shearographietechniken mit einer Linienerzeugungseinrichtung zum Erzeugen einer Linie kohärenter Strahlung, einer Linienabtasteinrichtung zum Abtasten der Linie kohärenter Strahlung über der Probe, Scherelementmittel zum Erzeugen von zwei seitlich versetzten Bildern der Probe und Phasenschritt- oder Rampenmittel zum Stufen oder Rampen der Phase eines der beiden Bilder und eine Videokamera zum Betrachten von Bildern der Probe und zum Bereitstellen einer entsprechenden Videoausgabe Signale.

Aufgabe der vorliegenden Erfindung ist es, ein verbessertes Verfahren zur interferometrischen Prüfung eines Reifens sowie ein entsprechendes Reifenprüfgerät zur Verfügung zu stellen.

Diese Aufgabe wird durch Verfahren gemäß Anspruch 1 sowie ein Reifenprüfgerät gemäß Anspruch 14 und eine Steuerungssoftware gemäß Anspruch 15 gelöst.

Vorteilhafte Ausgestaltungen der vorliegenden Erfindung sind Gegenstand der Unteransprüche.

Die vorliegende Erfindung umfasst ein Verfahren zur interferometrischen Prüfung eines Reifens in einer Druckkammer eines Reifenprüfgerätes, mit den Schritten:
- Erzeugung von Phasenbildern bei unterschiedlichen Drücken in der Drucckammer;
- Bildung von Teil-Phasendifferenzbildern zwischen aufeinanderfolgenden Phasenbildern und
- Summierung der Teil-Phasendifferenzbilder zu einem Gesamt-Phasendifferenzbild.

Bevorzugt werden die Phasenbilder durch eine shearografische Messung erzeugt. Das erfindungsgemäße Verfahren ist dadurch gekennzeichnet, dass in einer ersten Messphase der Druck in der Druckkammer in eine erste Richtung verändert wird und während einer zweiten Messphase eine Veränderung des Drucks in die entgegengesetzte Richtung erfolgt, wobei sowohl aus der ersten als auch der zweiten Messphase mindestens ein Teil-Phasendifferenzbild in die Summierung eingeht. Wird daher der absolute Druck in der Druckkammer in der ersten Messphase verringert, wird er in der zweiten Messphase erhöht und umgekehrt.

Da beispielsweise ausgehend von atmosphärischem Druck ohnehin zwei Phasen mit einem entgegengesetzten Druckverlauf notwendig sind, um den Reifen wieder bei atmosphärischem Druck entnehmen zu können, hat das erfindungsgemäße Vorgehen den Vorteil, dass beide Phasen auch zur Messung genutzt werden können. Gemäß dem Stand der Technik blieb dagegen eine Phase ungenutzt. Weiterhin haben die Erfinder der vorliegenden Erfindung erkannt, dass nicht nur beide Phasen als Messphasen genutzt werden können, sondern dass darüber hinaus Teil-Phasendifferenzbilder sowohl aus der ersten als auch aus der zweiten Messphase in das Gesamt-Phasendifferenzbild eingehen können. Da erfindungsgemäß damit zwei Messphasen mit entgegengesetzten Druckänderungen in das Gesamt-Phasendifferenzbild eingehen, vergrößert sich die effektiv für die Erstellung des Gesamt-Phasendifferenzbilds berücksichtigte Druckänderung entsprechend. Damit erhöht sich bei gleicher Druckänderung die Qualität der Reifenprüfung, da Fehlstellen deutlicher zutage treten. Alternativ kann die Druckänderung gegenüber dem Stand der Technik bei gleicher Qualität verringert werden. Dies hat erhebliche Kostenvorteile, da das Reifenprüfgerät nur noch für einen geringeren Druck ausgelegt werden muss. Zudem verkürzt sich die Messzeit, und die Schwingungsproblematik wird verbessert.

In einer bevorzugten Ausführungsform der vorliegenden Erfindung ist vorgesehen, dass das oder die Teil-Phasendifferenzbilder aus der zweiten Messphase mit umgekehrtem Vorzeichen in die Summierung eingeht oder eingehen. Hierdurch kann der in der zweiten Messphase gegenüber der ersten Messphase entgegengesetzten Druckänderung und damit umgekehrten Verformung des Reifens Rechnung getragen werden.

Das erfindungsgemäße Vorgehen hat den weiteren Vorteil, dass Störeinflüsse durch eine Gesamtkörperverformung, lokale Verformungen wie Druckstellen und Schwingungen reduziert werden. Diese Störeinflüsse verhalten sich - anders als die durch die gegenläufige Druckveränderung erzeugte Verformung aufgrund von Fehlstellen im Reifen - üblicherweise über beide Messphasen in etwa gleich. Da die Teil-Phasendifferenzbilder aus der zweiten Messphase aber mit umgekehrtem Vorzeichen in die Summierung eingehen, heben die Störeinflüsse aus der zweiten Messphase die Störeinflüsse aus der ersten Messphase daher zumindest zum Teil auf.

In einer möglichen Ausführungsform der vorliegenden Erfindung ist vorgesehen, dass in der ersten und/oder der zweiten Messphase mindestens zwei Teil-Phasendifferenzbilder gebildet werden und bevorzugt in die Summierung eingehen. Erfindungsgemäß erfolgt damit auch innerhalb der einzelnen Messphase weiterhin eine Summierung über mehrere Teil-Phasendifferenzbilder. Hierdurch kann trotz größerer Gesamtverformungen dennoch eine hohe Qualität der Prüfung erreicht werden.

Bevorzugt beträgt die zeitliche Dauer der zweiten Messphase mindestens 50% der zeitlichen Dauer der ersten Messphase. Hierdurch wird eine zumindest teilweiser Ausgleich der Störeinflüsse aus erster und zweiter Messphase sichergestellt. Die zeitliche Messdauer einer Messphase wird bevorzugt als der zeitliche Abstand zwischen der Erzeugung des ersten in ein Teil-Phasendifferenzbild dieser Messphase eingehenden Phasenbilds und des letzten in ein Teil-Phasendifferenzbilds dieser Messphase eingehendes Phasenbild bestimmt. Bevorzugt beträgt die zeitliche Dauer der zweiten Messphase mindestens 90% der zeitlichen Dauer der ersten Messphase. Beispielsweise kann die zweite Messphase die gleiche zeitliche Dauer aufweisen wie die erste Messphase.

Da die Verformungen des Reifens aufgrund von Störeinflüssen jedoch über die Zeit tendenziell abnehmen, kann die zweite Messphase auch eine größere zeitliche Dauer aufweisen als die erste Messphase. Beispielsweise kann die zeitliche Dauer der zweiten Messphase mindestens 110% der zeitlichen Dauer der ersten Messphase betragen.

Bevorzugt schwankt der zeitliche Abstand zwischen der Erzeugung aufeinander folgender Phasenbilder über die erste und zweite Messphase um maximal 20%, bevorzugt um maximal 10% des kürzesten zeitlichen Abstands. Besonders bevorzugt ist der zeitliche Abstand zwischen der Erzeugung aufeinander folgender Phasenbilder über die erste und zweite Messphase für alle Phasenbilder gleich groß. Hierdurch kann der Einfluss von Schwingungen auf das Gesamt-Phasendifferenzbild verringert werden, da sich Störungen aus der ersten und der zweiten Messphase gegenseitig zumindest teilweise ausgleichen.

Alternativ kann der zeitliche Abstand zwischen der Erzeugung aufeinander folgender Phasenbildern über die erste und zweite Messphase schwanken, insbesondere in gleicher Weise und/oder statistisch schwanken. Auch hierdurch kann der Einfluss von Schwingungen auf das Gesamt-Phasendifferenzbild verringert werden.

Beispielsweise kann ein zeitlicher Abstand zwischen der Erzeugung aufeinander folgender Phasenbildern zwischen 0,01 s und 1 s gewählt werden, weiter bevorzugt zwischen 0,05 und 0,5 s. Beispielweise kann jeder Frame oder jeder n-te Frame aus dem Video-Aufnahmerate des Sensors als Messpunkt eingesetzt werden, wobei n bevorzugt zwischen 2 und 10 liegt.
In einer möglichen Ausführungsform der vorliegenden Erfindung ist vorgesehen, dass bei der ersten Erzeugung eines Phasenbildes in der ersten Phase und der letzten Erzeugung eines Phasenbildes in der zweiten Phase der gleiche Druck in der Druckkammer herrscht. Insbesondere kann dabei in der ersten Phase von atmosphärischem Druck ausgegangen werden und in der zweiten Phase zu atmosphärischem Druck zurückgekehrt werden, so dass das Beladen des Reifenprüfgerätes mit dem Reifen vor der ersten Phase und das Entladen des Reifens aus dem Reifenprüfgerät nach der zweiten Phase jeweils bei atmosphärischem Druck erfolgen kann.

Bevorzugt kann dabei mit Unterdruck gearbeitet werden, so dass in der ersten Messphase ausgehend von atmosphärischem Druck ein Unterdruck erzeugt und über die Messphase erhöht wird. In der zweiten Messphase wird der Unterdruck dann wieder verringert, bevorzugt zurück auf atmosphärischen Druck. Dementsprechend kann es sich bei der Druckkammer um eine Unterdruckkammer handeln. Ausführungsformen, welche mit Überdruck arbeiten, sind aber ebenfalls denkbar.

Erfindungsgemäß ist es dabei nicht notwendig, dass sich die Erzeugung der Phasenbilder über die gesamte Druckänderung erstreckt. Beispielsweise kann das erste Phasenbild der ersten Messphase erst erzeugt werden, nachdem bereits eine gewisse Druckänderung vorgenommen wurde. Umgekehrt kann auch das letzte Phasenbild der zweiten Messphase erzeugt und danach noch eine Druckänderung vorgenommen werden.

Insbesondere kann daher die erste Messphase erst einsetzen, nachdem eine Druckveränderung gegenüber dem Ausgangsdruck in der Druckkammer vorgenommen wurde und/oder wobei die zweite Messphase enden, bevor der Druck in der Druckkammer auf den Ausgangsdruck zurückgegangen ist.

Ein solcher Offset der Messphase oder Messphasen gegenüber dem Ausgangsdruck kann Störeinflüsse verringern.

In einer möglichen Ausführungsform wird jedoch das erste Phasenbild in der ersten Phase und das letzte Phasenbild in der zweiten Phase bei atmosphärischem Druck erzeugt.

Je ähnlicher sich die Druckverläufe in der ersten und der zweiten Phase sind, desto besser können Störeinflüsse, welche auf Schwingungen beruhen, durch die Summierung über beide Phasen ausgeglichen werden.

In einer möglichen Ausführungsform der vorliegenden Erfindung ist daher vorgesehen, dass die Veränderung des Drucks in der zweiten Messphase mit einer durchschnittlichen Geschwindigkeit erfolgt, welche maximal 20% und bevorzugt maximal 10% von der durchschnittlichen Geschwindigkeit der Veränderung des Drucks in der ersten Messphase abweicht.

Weiterhin ist In einer möglichen Ausführungsform der vorliegenden Erfindung vorgesehen, dass das erste Phasenbild in der ersten Phase und das letzte Phasenbild in der zweiten Phase bei gleichem Druck aufgenommen werden.

Gemäß einer möglichen Ausführungsform der vorliegenden Erfindung erfolgt die Veränderung des Drucks in der zweiten Messphase allerdings schneller als die Veränderung des Drucks in der ersten Messphase. Beispielsweise kann in der zweiten Messphase eine Schnellentlüftung oder Schnellbelüftung der Druckkammer erfolgen.

Dies berücksichtigt, dass viele auf dem Markt befindliche Geräte konstruktiv so aufgebaut sind, dass der Unterdruck in der ersten Phase langsamer ansteiget als er in der zweiten Phase abfällt. Auch bei diesen Geräten kann die vorliegende Erfindung angewandt werden. Wird dabei der Druckverlauf beibehalten, bedarf es nur eines Software-Updates.

Ändert sich der Druck in einer der beiden Messphasen schneller als in der anderen Messphase, so umfasst diese Messphase bevorzugt einen Abschnitt, in welchem sich der Druck nicht ändert. Hierdurch kann der ansonsten vorliegende Unterschied in der zeitlichen Dauer der Messphasen verringert werden.

Bevorzugt ist allerdings vorgesehen, dass die Veränderung des Drucks in der zweiten Messphase symmetrisch zur Veränderung des Drucks in der ersten Messphase erfolgt. Hierdurch können Störeinflüsse, welche auf Schwingungen beruhen, am besten ausgeglichen werden.

In einer weiteren bevorzugten Ausführungsform der vorliegenden Erfindung sind mehrere aufeinanderfolgende erste und zweite Messphasen vorgesehen. Bevorzugt erfolgt dabei zur Erzeugung des Gesamt-Phasendifferenzbildes eine Summierung über die Teil-Phasendifferenzphasenbilder aus allen Messphasen. Hierdurch kann die Druckänderung pro Messphase und damit die insgesamt benötigte Druckfestigkeit des Reifenprüfgerätes noch weiter verringert werden.

Bevorzugt sind die absoluten Druckveränderungen in mehreren aufeinander folgenden Messphasen gleich groß.

Bevorzugt bilden die aufeinanderfolgenden ersten und zweiten Messphasen einen periodischen Druckverlauf. Dies verringert wiederum Störungen des Prüfergebnisses, welche auf Schwingungen beruhen.

In einer möglichen Ausführungsform der vorliegenden Erfindung ist vorgesehen, dass mindestens ein Phasenbild sowohl in ein Teil-Phasendifferenzbild aus einer ersten Messphase als auch ein Teil-Phasendifferenzbild aus einer zweiten Messphase eingeht. Insbesondere kann am Übergang zwischen zwei Messphasen ein Phasenbild erzeugt werden, welches in das letzte Teil-Phasendifferenzbild der vor dem Übergang liegenden Messphase und in das erste Teil-Phasendifferenzbild der nach dem Übergang liegenden Phase eingeht. Beispielsweise kann am Ende der ersten Phase, bei welcher beispielsweise maximaler Unterdruck oder Überdruck herrscht, ein Phasenbild erzeugt werden, welches in das letzte Teil-Phasendifferenzbild der ersten Messphase und in das erste Teil-Phasendifferenzbild der zweiten Messphase eingeht. Werden mehrere aufeinanderfolgende erste und zweite Messphasen eingesetzt, kann auch am Ende der zweiten Messphase, beispielsweise bei minimalem Unterdruck oder Überdruck, ein Phasenbild erzeugt werden, welches in das letzte Teil-Phasendifferenzbild der zweiten Messphase und in das erste Teil-Phasendifferenzbild der ersten Messphase eingeht.

In einer bevorzugten Ausführungsform der vorliegenden Erfindung ist vorgesehen, dass in der ersten Messphase ein Unterdruck in der Druckkammer erzeugt wird, welcher bevorzugt in der zweiten Messphase wieder abgelassen wird. Alternativ kann aber auch mit Überdruck gearbeitet werden.

In einer möglichen Ausführungsform der vorliegenden Erfindung ist vorgesehen, dass aus den Phasenbildern und/oder Teil-Phasendifferenzbildern und/oder dem Gesamt-Phasendifferenzbild eine Ganzkörperverformung eliminiert wird. Besonders bevorzugt wird aus dem Gesamt-Phasendifferenzbild durch Filterung eine Ganzkörperverformung bestimmt, welche dann von dem Gesamt-Phasendifferenzbild abgezogen wird.

In einer möglichen Ausführungsform der vorliegenden Erfindung ist vorgesehen, dass vor der Summierung der Teil-Phasendifferenzbilder eine Phasenfilterung der Teil-Phasendifferenzbilder erfolgt. Dies erhöht die Qualität der Messergebnisse.

Bevorzugt ist vorgesehen, dass die Phasenbilder aus einem einzigen Messbild erzeugt werden. Hierdurch können die Phasenbilder auch erzeugt werden, während sich der Druck in der Druckkammer verändert und der Reifen damit verformt. Werden dagegen mehrere Messbilder benötigt, um ein Phasenbild zu erzeugen, muss der Druck in der Druckkammer während der Aufnahme der mehreren Messbilder konstant gehalten werden, um den Reifen nicht zu verformen.

Bevorzugt wird zur Erzeugung eines Teil-Phasendifferenzbildes ein räumlicher Phasenshift vorgenommen. Dies hat gegenüber einem zeitlichen Phasenshift den Vorteil, dass das Teil-Phasendifferenzbild mit nur einem Messbild erzeugt werden können.

Bevorzugt wird zur Erzeugung eines Messbildes eine Abbildungsoptik eingesetzt, welche eine Blende mit mindestens einer Öffnung, insbesondere einem Spalt, und bevorzugt zwei Öffnungen, insbesondere zwei Spalten aufweist, durch die eine räumliche Trägerfrequenz erzeugbar ist. Dies ermöglicht die Erzeugung der Phasenbilder aus jeweils nur einem Messbild. Insbesondere kann dabei eine Messanordnung eingesetzt werden, wie sie aus der DE 198 56 400 A1 bekannt ist, deren Inhalt vollumfänglich zum Gegenstand der vorliegenden Anmeldung gemacht wird.

In einer möglichen Ausführungsform der vorliegenden Erfindung ist vorgesehen, dass die Veränderung des Drucks in der ersten und/oder in der zweiten Phase kontinuierlich erfolgt. Die kontinuierliche Druckveränderung verringert induzierte Schwingungen. Bevorzugt ist der Verlauf der Druckveränderung in der ersten und/oder der zweiten Phase im Wesentlichen linear. In einer möglichen Ausführungsform kann die erste oder die zweite Messphase jedoch auch einen Abschnitt umfassen, in welchem keine Druckveränderung erfolgt.

In einer möglichen Ausführungsform der vorliegenden Erfindung ist vorgesehen, dass die Aufnahme mindestens eines der Phasenbilder erfolgt, während der Druck verändert wird. Dies ermöglicht eine schnelle Messroutine.

Bevorzugt ist die Veränderung des Drucks während der erfindungsgemäßen Reifenprüfung kleiner als 50 mBar, bevorzugt kleiner als 40 mBar, weiter bevorzugt kleiner als 30 mBar, weiter bevorzugt kleiner als 20 mBar, weiter bevorzugt kleiner als 10 mBar ist. Wie bereits oben näher beschrieben, ermöglicht das erfindungsgemäße Vorgehen eine Verringerung der Druckveränderung in den einzelnen Messphasen. Hierdurch wird das Reifenprüfgerät erheblich günstiger, da es nur noch auf einen geringeren Druck ausgelegt werden muss.

Die vorliegende Erfindung umfasst weiterhin ein Reifenprüfgerät zur interferometrischen Prüfung eines Reifens gemäß Anspruch 14.

Erfindungsgemäß weist das Prüfgerät weiterhin eine Vorrichtung zur Veränderung des Drucks in der Druckkammer auf. Beispielsweise kann diese eine oder mehrere Pumpen, Ventile, Drosseln und/oder Klappen umfassen. Insbesondere kann ein Umsteuerventil eingesetzt werden.

Weiterhin nimmt die Steuerung bevorzugt eine Auswertung der Messergebnisse des mindestens einen Messkopfes vor, und insbesondere eine Auswertung der durch den Messkopf gemessenen Messbilder. Insbesondere kann die Steuerung dabei Funktionen zur Erzeugung von Phasenbildern, zur Erzeugung von Teil-Phasendifferenzbildern und zur Erzeugung eines Gesamt-Phasendifferenzbildes aufweisen.

Insbesondere kann die Steuerung folgendes Verfahren durchführen:
- Erzeugung von Phasenbildern bei unterschiedlichen Drücken in der Drucckammer durch Ansteuerung des Messkopfes und der Vorrichtung zur Veränderung des Drucks in der Druckkammer;
- Bildung von Teil-Phasendifferenzbildern zwischen aufeinanderfolgenden Phasenbildern und
- Summierung der Teil-Phasendifferenzbilder zu einem Gesamt-Phasendifferenzbild.
Dabei verändert die Steuerung in einer ersten Messphase den Druck in der Drucckammer in eine erste Richtung, und verändert in einer zweiten Messphase den Druck in der Druckkammer in die entgegengesetzte Richtung. Weiterhin geht in die durch die Steuerung vorgenommene Summierung zur Erzeugung des Gesamt-Phasendifferenzbildes sowohl aus der ersten als auch der zweiten Messphase mindestens ein Teil-Phasendifferenzbild ein.

Bevorzugt wird das Verfahren zur Prüfung des Reifens dabei so durchgeführt, wie dies bereits oben näher beschrieben wurde.

Bevorzugt führt die Steuerung das Verfahren automatisch durch.

Die Steuerung umfasst bevorzugt einen Mikroprozessor und einen Speicher, in welchem eine Steuerungssoftware abgespeichert ist, welche auf dem Mikroprozessor abläuft. Die Steuerung steht bevorzugt über Steuerungsleitungen und/oder Datenleitungen mit dem Messkopf und/oder der Vorrichtung zur Veränderung des Drucks in der Druckkammer in Verbindung. Weiterhin weist die Steuerung bevorzugt eine Ausgabeeinheit und/oder Ausgabeschnittstelle auf.

Bei dem Messkopf handelt es sich bevorzugt um einen shearografischen Messkopf. Der Messkopf kann einen Laser, insbesondere eine oder mehrere Laserdioden, eine Abbildungsoptik und einen Bildsensor, insbesondere einen CCD-Sensor und/oder einen CMOS-Sensor aufweisen.

Der Messkopf arbeitet bevorzugt auf Grundlage eines räumlichen Phasenshifts. Insbesondere kann der Messkopf eine Abbildungsoptik aufweisen, welche eine Blende mit mindestens einer Öffnung, insbesondere einem Spalt, und bevorzugt zwei Öffnungen, insbesondere zwei Spalten aufweist, durch die eine räumliche Trägerfrequenz erzeugbar ist. Dies ermöglicht die Erzeugung der Phasenbilder aus jeweils nur einem Messbild. Insbesondere kann dabei eine Messanordnung eingesetzt werden, wie sie aus der DE 198 56 400 A1 bekannt ist.

Die vorliegende Erfindung umfasst weiterhin eine Steuerungssoftware für ein erfindungsgemäßes Reifenprüfgerät, wie es oben beschrieben wurde.

Die vorliegende Erfindung wird nun anhand von Ausführungsbeispielen sowie Figuren näher beschrieben.

Dabei zeigen:
- Fig. 1:: den Druckverlauf und die Messpunkte bei einem ersten Prüfverfahren gemäß dem Stand der Technik,
- Fig. 2:: den Druckverlauf und die Messpunkte bei einem zweiten Prüfverfahren gemäß dem Stand der Technik,
- Fig. 3:: den Druckverlauf und die Messpunkte bei einem ersten Ausführungsbeispiel eines erfindungsgemäßen Verfahrens,
- Fig. 4:: den Druckverlauf und die Messpunkte bei einem zweiten Ausführungsbeispiel eines erfindungsgemäßen Verfahrens,
- Fig. 5:: den Druckverlauf und die Messpunkte bei einem dritten Ausführungsbeispiel eines erfindungsgemäßen Verfahrens,
- Fig. 6:: den Druckverlauf und die Messpunkte bei einem vierten Ausführungsbeispiel eines erfindungsgemäßen Verfahrens,
- Fig. 7:: den Druckverlauf und die Messpunkte bei einem fünften Ausführungsbeispiel eines erfindungsgemäßen Verfahrens, und
- Fig. 8:: eine Prinzipdarstellung eines Ausführungsbeispiel eines erfindungsgemäßen Reifenprüfgerätes.

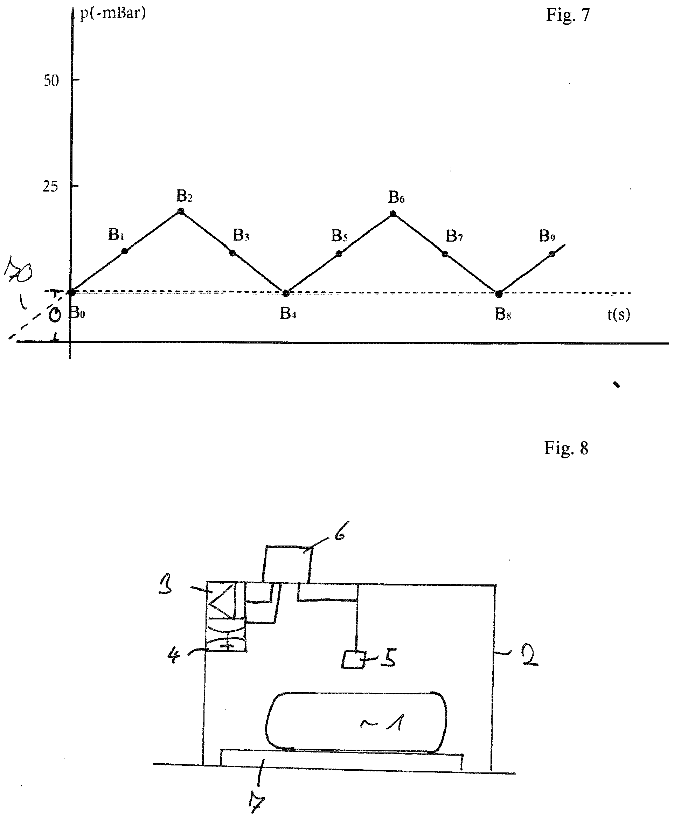

Die erfindungsgemäßen Verfahren können beispielsweise mit Hilfe eines Reifenprüfgerätes durchgeführt werden, wie es in Fig. 8 in einer Prinzipdarstellung dargestellt ist. Das Reifenprüfgerät weist eine Druckkammer 2 auf, in welche der Reifen 1 zur Durchführung der Prüfung eingebracht wird. Die Druckkammer weist hierfür mindestens eine Öffnung auf, durch welche der Reifen in die Druckkammer eingebracht und/oder aus dieser Entnommen werden kann, und welche luftdicht verschließbar ist. Das Reifenprüfgerät weist weiterhin eine Vorrichtung 3, 4 auf, durch welche der Druck in der Druckkammer 2 verändert werden kann. Beispielsweise kann eine Pumpe 3 vorgesehen sein, durch welche in der Druckkammer 2 ein Unterdruck erzeugt wird. Weiterhin kann eine Vorrichtung 4 zum Ablassen des Unterdrucks vorgesehen sein, beispielsweise ein Ventil, eine Drossel oder Klappe. Insbesondere kann zur kontrollierten Veränderung des Drucks in der Druckkammer ein Umsteuerventil zum Einsatz kommen. Jedoch sind auch andere Vorrichtungen zum Verändern des Drucks in der Druckkammer 2 denkbar. Weiterhin kann statt mit Unterdruck auch mit Überdruck gearbeitet werden.

Das Reifenprüfgerät weist weiterhin einen interferometrischen Messkopf 5 auf, durch welchen zumindest ein Teilbereich der Oberfläche des Reifens geprüft werden kann. Aufgrund des üblicherweise relativ kleinen Messfeldes der Messköpfe wird mit einem Prüfvorgang üblicherweise nur ein Teilbereich der Oberfläche des Reifens geprüft. Für jeden zu prüfenden Teilbereich der Oberfläche des Reifens wird bevorzugt ein erfindungsgemäßes Prüfverfahren durchgeführt. Je nach Ausgestaltung des Reifenprüfgerätes kann der Messkopf und/oder der Reifen bewegt werden, um nacheinander unterschiedliche Teilbereiche der Oberfläche des Reifens zu prüfen. Beispielsweise kann der Reifen 1 hierfür auf einer drehbaren Auflage 7 aufliegen, oder der Messkopf drehbar sein. Alternativ ist auch eine stehende Anordnung des Reifens innerhalb des Reifenprüfgerätes denkbar.

Das Reifenprüfgerät weist weiterhin eine Steuerung 6 auf, durch welche die Vorrichtung 3, 4 zur Veränderung des Drucks in der Druckkammer 2 sowie der Messkopf 5 angesteuert werden. Die Steuerung 6 dient weiterhin der Auswertung der durch den Messkopf 5 erzeugten Daten. Die Steuerung ist so konfiguriert, dass sie ein erfindungsgemäßes Verfahren durch eine entsprechende Ansteuerung der Vorrichtung zum Verändern des Drucks in der Druckkammer, durch Ansteuerung des Messkopfes 5 sowie entsprechende Auswertung der erzeugten Daten durchführt. Insbesondere führt die Steuerung das Verfahren dabei automatisch durch.

Erfindungsgemäß wird nach einem Einbringen des Reifens 1 in die Druckkammer 2 der Druck in der Kammer verändert, und bei unterschiedlichen Drücken in der Druckkammer eine Folge von Phasenbildern zu erzeugen. Aus aufeinanderfolgenden Phasenbildern werden nunmehr Teil-Phasendifferenzbilder gebildet, welche dementsprechend einer Teil-Verformung des Reifens zwischen der Erzeugung der beiden Phasenbilder entsprechen. Die Teil-Phasendifferenzbilder werden dann zu einem Gesamt-Phasendifferenzbild summiert.

Anders als bei Verfahren gemäß dem Stand der Technik, bei welchen während der Messphase der Druck entweder ansteigt oder abfällt, umfasst das erfindungsgemäße Verfahren nunmehr jedoch zwei Messphasen, eine mit steigendem Unter- oder Überdruck, und eine mit fallendem Unter- oder Überdruck. Dabei wird sowohl für die erste Messphase, als auch für die zweite Messphase mindestens ein Teil-Phasendifferenzbild erzeugt, welche dann miteinander summiert werden. Um den während der zweiten Messphase umgekehrten Druckverlauf zu berücksichtigen, gehen die dort erzeugten Teil-Phasendifferenzbilder allerdings mit umgekehrten Vorzeichen in die Summierung ein wie die in den ersten Messphasen erzeugten Teil-Phasendifferenzbilder.

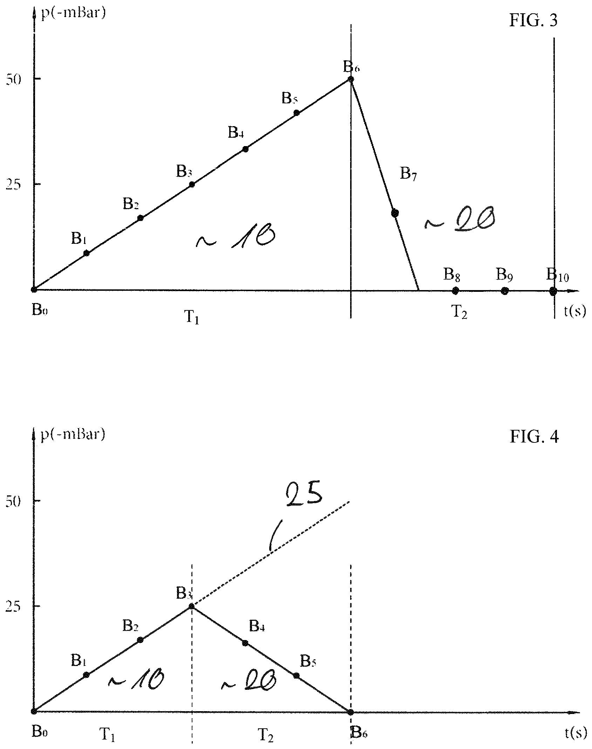

Fig. 3 zeigt ein erstes Ausführungsbeispiel eines solchen Verfahrens. Hierbei wird während einer ersten Messphase 10 der Unterdruck erhöht, und während einer zweiten Messphase 20 der Unterdruck wieder verringert. Während der ersten Messphase werden die Phasenbilder B₀ bis B₅ erzeugt, im Überlappungsbereich zwischen der ersten und der zweiten Messphase das Phasenbild B₆, und während der zweiten Messphase 20 die Phasenbilder B₇ bis B₁₀. Das Phasenbild B₆ bildet damit sowohl das letzte Phasenbild aus der ersten Messphase 10, als auch das erste Phasenbild aus der zweiten Messphase 20.

Aus jeweils aufeinander folgenden Phasenbildern Bᵢ und Bᵢ₊₁ wird jeweils ein Teil-Phasendifferenzbild Dᵢ = Bᵢ₊₁ - Bᵢ erzeugt. Diese einzelnen Teil-Phasendifferenzbilder Dᵢ werden dann aufsummiert, wobei die Phasendifferenzbilder D₆ bis D₉ der zweiten Messphase 20 mit dem umgekehrten Vorzeichen zu den Teil-Phasendifferenzbildern D₀ bis D₅ der ersten Messphase 10 in die Summierung eingehen. Hierdurch ergibt sich ein Gesamt-Phasendifferenzbild, in welches sowohl Verformungen des Reifens während der ersten, als auch während der zweiten Messphase eingehen.

Dadurch, dass sowohl bei steigendem als auch bei fallendem Unter- bzw. Überdruck Messungen vorgenommen werden und in das Gesamt-Phasendifferenzbild eingehen, verdoppelt sich die effektive Druckveränderung und damit die effektive Verformung des Reifens, welche in das Gesamt-Phasendifferenzbild eingeht. Entsprechend deutlicher treten die Defekte des Reifens zu Tage.

Dies kann dazu genutzt werden, um die für die Reifenprüfung eingesetzten Druckveränderungen zu verringern, ohne die Qualität des Messergebnisses zu beeinträchtigen. Ein erfindungsgemäßes Reifenprüfgerät kann daher mit einem geringeren Über- bzw. Unterdruck arbeiten, und daher auch entsprechend kostengünstiger hergestellt werden, da insbesondere die Druckkammer nur für einen geringeren Unter- bzw. Überdruck ausgelegt werden muss. Zudem können die Komponenten, welche zur Druckveränderung eingesetzt werden, einfacher ausgestaltet werden.

Weiterhin verringert die vorliegende Erfindung auch die Schwingungsproblematik, da durch geringere Druckveränderungen auch weniger Schwingungen am Reifen angeregt werden. Weiterhin beschleunigt sich das Verfahren, da nunmehr der gesamte Druckverlauf zur Messung herangezogen werden kann.

Bei dem in Fig. 3 gezeigten Ausführungsbeispiel werden die Phasenbilder in der ersten und der zweiten Messphase jeweils mit dem gleichen zeitlichen Abstand aufgenommen. Weiterhin erfolgt die Aufnahme der Phasenbilder für die erste Messphase über einen Zeitraum T₁, für die zweite Messphase über einen Zeitraum T₂, wobei die zeitliche Dauer T₂ der zweiten Messphase mehr als 50 % und weiter bevorzugt mehr als 80 % der zeitlichen Dauer T₁ der ersten Messphase beträgt. Hierdurch ergibt sich zumindest eine teilweise Eliminierung von durch Schwingungen, Druckstellen und Ganzkörperverformungen hervorgerufenen Problemen.

Bei dem in Fig. 3 gezeigten Ausführungsbeispiel, welches auf dem in Fig. 2 dargestellten, aus dem Stand der Technik bekannten Druckverlauf aufbaut, erfolgt die Veränderung des Druckes in der ersten Phase 10 langsamer als in der zweiten Phase 20. Dies ist bei vielen Geräten gemäß dem Stand der Technik der Fall, und häufig durch die mechanische Konstruktion der dort eingesetzten Vorrichtung zur Veränderung des Drucks in der Druckkammer bedingt. Ein Verfahren gemäß Fig. 3 kann daher auch bei solchen aus dem Stand der Technik bekannten Vorrichtungen problemlos durch ein einfaches Software-Update implementiert werden, ohne die mechanische Konstruktion des Gerätes verändern zu müssen. Wie aus Fig. 3 ersichtlich, führt dies dazu, dass nur über einen ersten Teilbereich der zweiten Messphase 20 eine Druckveränderung erfolgt. Über einen zweiten Teilbereich erfolgt dagegen keine Druckveränderung mehr. Die weiteren Phasenbilder Bg und B₁₀ tragen daher nicht mehr dazu bei, eine geometrische Veränderung des Reifens aufgrund von Fehlstellen des Reifens zu identifizieren. Sie tragen jedoch zu einer Verringerung der durch Schwingungen, Druckstellen und Ganzkörperverformungen hervorgerufenen Probleme bei.

Bevorzugt erfolgt die Druckveränderung in der ersten Messphase 10 und der zweiten Messphase 20 jedoch symmetrisch, wie dies bei dem Ausführungsbeispiel in Fig. 4 gezeigt ist. Die symmetrische Ausgestaltung des Druckverlaufs in der ersten und der zweiten Messphase hat den Vorteil, dass Störeffekte, welche auf Schwingungen beruhen, noch besser verringert werden.

Während der ersten Messphase 10 werden bei dem in Fig. 4 gezeigten Ausführungsbeispiel die Phasenbilder B₀ bis B₂ erzeugt, am Übergang zwischen der ersten Phase 10 und der zweiten Phase 20 das Phasenbild B₃, und während der zweiten Messphase 20 die Phasenbilder B₄ bis B₆, wobei das am Übergang zwischen der ersten Phase 10 und der zweiten Phase 20 erzeugte Phasenbild B₃ wieder für beide Phasen genutzt wird. Wie bereits im Hinblick auf das erste Ausführungsbeispiel beschrieben, werden nunmehr aus aufeinanderfolgenden Phasenbildern Teil-Phasendifferenzbilder Dᵢ = Bᵢ₊₁ - Bᵢ erzeugt und aufsummiert, wobei die Teil-Phasendifferenzbilder aus der zweiten Messphase 20 mit umgekehrtem Vorzeichen in die Summierung eingehen.

Die Verwendung des umgekehrten Vorzeichens für die zweite Messphase 20 führt dazu, dass sich die dort erzeugten Teil-Phasendifferenzbilder so auf die Darstellung der durch Fehlstellen des Reifens erzeugten Verformungen in dem Gesamt-Phasendifferenzbild auswirken, als würde der Druck in der zweiten Messphase weiter ansteigen und der in Fig. 4 gestrichelt eingezeichneten Linie 25 entsprechen (dies gilt zumindest dann, wenn man von einem linearen Zusammenhang zwischen dem Druck und der Verformung des Reifens ausgeht). Da der Gesamteffekt damit verdoppelt wird, kann wie in Fig. 4 gezeigt die Größe der Druckveränderung entsprechend verringert werden. Da die durch Schwingungen, Druckstellen und Ganzkörperverformungen hervorgerufenen Effekte dagegen druckunabhängig sind, führt das umgekehrte Vorzeichen für die erste und die zweite Messphase dagegen zu einer gegenseitigen Reduktion dieser Einflüsse.

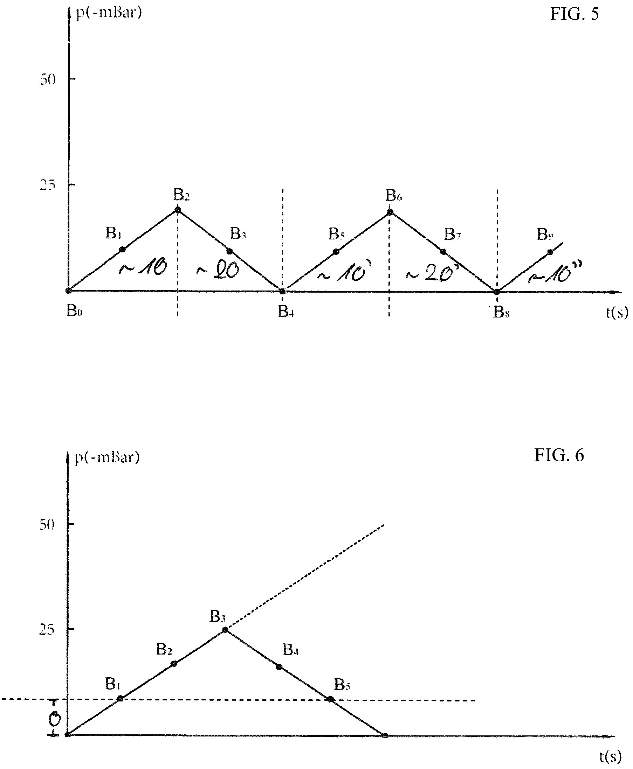

Erfindungsgemäß können auch mehrere aufeinanderfolgende erste und zweite Messphasen eingesetzt werden, wie dies bei dem dritten Ausführungsbeispiel in Fig. 5 gezeigt ist.

Nach einer ersten Messphase 10 mit steigendem Unterdruck und einer zweiten Messphase 20 mit fallendem Unterdruck folgt eine weitere erste Messphase 10' mit steigendem und dann eine weitere zweite Messphase 20' mit fallendem Unterdruck. Weitere erste Messphasen 10" und weitere zweite Messphasen 20" können folgen.

Bevorzugt wird für alle ersten Messphasen 10, 10', 10" der gleiche Druckverlauf gewählt, und auch für alle zweiten Messphasen 20, 20', 20" der gleiche Druckverlauf, so dass sich insgesamt bevorzugt ein periodischer Verlauf des Drucks ergibt. Bevorzugt ist der Druckverlauf zwischen den ersten und zweiten Messphasen wiederrum symmetrisch.

Die Phasenbilder und Teil-Phasendifferenzbilder werden auch hier in gleicher Weise erzeugt, wie dies bereits oben für die ersten und zweiten Messphasen beschrieben wurde. Weiterhin gehen auch hier die Teil-Phasendifferenzbilder aus den zweiten Messphasen 20, 20' mit umgekehrtem Vorzeichen in die Summierung ein wie die Teil-Phasendifferenzbilder aus den ersten Messphasen 10, 10', 10".

Bei dem in Fig. 5 gezeigtem Ausführungsbeispiel wird jeweils bei maximalem und minimalem Druck, d.h. zu Beginn und am Ende der Messung sowie in den Überlappungsbereichen der ersten und zweiten Messphasen ein Phasenbild aufgenommen, wobei die in den Überlappungsbereichen der ersten und zweiten Messphasen aufgenommene Phasenbilder B₂, B₄, B₆, B₈ jeweils sowohl in das letzte Phasendifferenzbild der vorangegangenen Messphase als auch in das erste Phasendifferenzbild der nachfolgenden Messphase eingehen. Innerhalb der einzelnen Messphasen wird dann nur noch ein Zwischen-Phasenbild B₁, B₃, B₅, B₇, Bg aufgenommen, so dass pro Messphase nur zwei Teil-Phasendifferenzbilder gebildet werden.

Durch die Verwendung mehrerer erster und zweiter Messphasen wird bei gleicher Druckveränderung pro Messphase die effektive Gesamtdruckveränderung, welche in ein Gesamt-Differenzbild eingeht, erhöht. Dementsprechend kann bei gleichbleibender oder sogar steigender Qualität der Reifenprüfung die Druckveränderung pro Messphase entsprechend verringert werden.

Während gemäß dem Stand der Technik Druckveränderungen im Bereich von 50 mBar üblich sind, erlaubt das erfindungsgemäße Verfahren kleinere Druckveränderungen. Beispielsweise kann dabei mit Druckveränderungen kleiner 30 mBar gearbeitet werden, bevorzugt kleiner 20 und weiter bevorzugt kleiner 10 mBar. Hierfür müssen lediglich entsprechend viele erste und zweite Messphasen eingesetzt und die entsprechenden Teil-Phasendifferenzbilder aufsummiert werden.

Bei den in Fig. 3 bis 5 gezeigten Ausführungsbeispielen wurden jeweils pro Messphase mehrere Teil-Phasendifferenzbilder erzeugt. Je kleiner die Druckveränderungen pro Messphase sind, desto weniger Teil-Phasendifferenzbilder pro Messphase sind jedoch nötig. Dementsprechend ist es ebenfalls denkbar, pro Messphase lediglich ein Teil-Phasendifferenzbild zu erzeugen. In diesem Fall muss jeweils lediglich zu Beginn und zum Ende jeder Messphase bzw. jeweils bei minimalem und maximalem Druck ein Phasenbild erzeugt und hieraus ein Teil-Phasendifferenzbild gebildet werden. Daher muss also lediglich zu Beginn und zum Ende der Messung sowie beim Übergang zwischen einer ersten und einer zweiten bzw. einer zweiten und ersten Phase jeweils ein Phasenbild erzeugt werden.

Während der einzelnen Messphasen erfolgt die Druckveränderung bevorzugt kontinuierlich. Insbesondere kann dabei ein im Wesentlichen linearer Druckverlauf eingesetzt werden. Wie in Fig. 3 dargestellt, ist dies jedoch nicht zwingend.

Bei den in Fig. 3 bis 5 dargestellten Ausführungsbeispielen erfolgt die Aufnahme des ersten Phasenbildes der ersten Messphase und des letzten Phasenbildes der zweiten Messphase jeweils bei Umgebungsdruck. Hierdurch kann der gesamte Zeitraum, über welchen der Druck in der Druckkammer verändert wird, als Teil einer Messphase genutzt werden.

Alternativ kann das Prüfverfahren jedoch auch mit einem Offset arbeiten, wie dies in Fig. 6 und 7 dargestellt ist. Hierfür wird der Druck in der Druckkammer ausgehend von einem Ausgangsdruck, bei welchem es sich üblicherweise um den Umgebungsdruck und damit atmosphärischen Druck handelt, zunächst um einen Offset O verändert, bevor die erste Messphase 10 mit einem ersten Messbild einsetzt. In gleicher Weise kann die zweite Messphase mit der Aufnahme des letzten Phasenbildes bereits bei Erreichen des Offsets O enden.

Das Ausführungsbeispiel in Fig. 6 entspricht dabei dem aus Fig. 4 bekannten vorgehen, wobei jedoch als erstes Bild der ersten Messphase das Phasenbild B₁ genutzt wird, und als letztes Phasenbild der zweiten Messphase das Phasenbild B₅. Hierdurch ergibt sich für beide Messphasen ein Offset O.

Das Ausführungsbeispiel in Fig. 7 entspricht dagegen dem aus Fig. 5 bekannten vorgehen, wobei jedoch vor der ersten Messphase bereits eine Druckänderung 70 um den Offset O vorgenommen wird. Der Druck wird dann in den einzelnen Messphasen zwischen dem Offset O und dem Maximaldruck verändert.

Im Rahmen der vorliegenden Erfindung kommt als interferometrisches Messverfahren bevorzugt die Shearographie zum Einsatz, da diese für die harten industriellen Bedingungen, welche bei der Reifenprüfung üblicherweise vorliegen, besonders geeignet ist.

Bevorzugt werden die einzelnen Phasenbilder erfindungsgemäß aus einem einzigen Messbild erzeugt. Dies hat den Vorteil, dass zur Erzeugung eines Phasenbildes die Druckveränderung nicht gestoppt werden muss. Vielmehr können die Phasenbilder auch während der Druckveränderung, ggf. mit hoher Frequenz, erzeugt werden.

Bevorzugt wird zur Erzeugung der Phasenbilder die vom Reifen reflektierte kohärente Strahlung von einer Abbildungsoptik auf eine Bildebene abgebildet, in welcher sich ein Sensor befindet, wobei auf dem Sensor eine nach dem Shearing-Verfahren erzeugte Referenzstrahlung überlagert wird und aus den Messsignalen des Sensors die Phase der Strahlung bestimmt wird. Der Messkopf arbeitet hierzu bevorzugt auf Grundlage eines räumlichen Phasenshifts.

Bevorzugt weist die Abbildungsoptik eine Blende mit mindestens einer Öffnung, insbesondere einem Spalt auf. Bevorzugt weist die Blende mit zwei Öffnungen, insbesondere zwei Spalten auf. Hierdurch kann eine räumliche Trägerfrequenz erzeugt werden, so dass ein Phasenbild aus nur einem Messbild erzeugt werden kann. Bei dem Sensor handelt es sich beispielsweise um einen CCD-Sensor und/oder ein CMOS-Sensor. Die Abbildungsoptik so ausgestaltet sein und die Messung kann so erfolgen, wie dies aus der DE 198 56 400 A1 bekannt ist. Der Inhalt der DE 198 56 400 A1 wird vollumfänglich zum Gegenstand der vorliegenden Anmeldung gemacht.

Weiterhin kann eine Phasenfilterung der einzelnen Teil-Phasendifferenzbilder erfolgen, bevor diese summiert werden. Durch die Phasenfilterung der einzelnen Teil-Phasendifferenzbilder ergeben sich ein besseres Kohärenzverhältnis und eine bessere Phasenbildqualität.

Weiterhin ist es erfindungsgemäß möglich, die Gesamtkörperverformung bzw. deren Einflüsse auf das Gesamt-Phasendifferenzbild zu eliminieren bzw. zu verringern. Weiterhin ist es möglich, die lokale Verformung aufgrund von Druckstellen und die Verformung aufgrund von Schwingungen bzw. deren Einflüsse auf das Gesamt-Phasendifferenzbild zu eliminieren bzw. zu verringern. Dies erfolgt insbesondere durch die Summierung über die zweite Messphase mit umgekehrtem Vorzeichen.

Eine Verringerung der Einflüsse einer Gesamtkörperverformung kann zusätzlich durch entsprechende Bearbeitung der Phasenbilder, der Teil-Phasendifferenzbilder und/oder des Gesamt-Phasendifferenzbildes erfolgen. Beispielsweise kann aus Referenzmessungen oder durch eine Filterung des Gesamt-Phasendifferenzbildes das durch die Ganzkörperverformung erzeugte Gesamt-Phasendifferenzbild ermittelt und von dem Gesamt-Phasendifferenzbild subtrahiert werden.

Weiterhin kann die Erzeugung der Phasenbilder, der Teil-Phasendifferenzbilder und/oder die Summierung so erfolgen, wie dies aus der DE 101 01 057 A1 bekannt ist.

## Patentansprüche

1. Verfahren zur interferometrischen Prüfung eines Reifens (1) in einer Druckkammer eines Reifenprüfgerätes, mit den Schritten:
- Erzeugung von Phasenbildern bei unterschiedlichen Drücken in der Drukkammer (2),
- Bildung von Teil-Phasendifferenzbildern zwischen aufeinanderfolgenden Phasenbildern und
- Summierung der Teil-Phasendifferenzbilder zu einem Gesamt-Phasendifferenzbild,
**dadurch gekennzeichnet,**
**dass** in einer ersten Messphase der Druck in der Druckkammer in eine erste Richtung verändert wird und in einer zweiten Messphase eine Veränderung des Drucks in die entgegengesetzte Richtung erfolgt, wobei sowohl aus der ersten als auch der zweiten Messphase mindestens ein Teil-Phasendifferenzbild in die Summierung eingeht.

2. Verfahren nach Anspruch 1, wobei das oder die Teil-Phasendifferenzbilder aus der zweiten Messphase mit umgekehrtem Vorzeichen in die Summierung eingeht oder eingehen.

3. Verfahren nach Anspruch 1 oder 2, wobei in der ersten und/oder der zweiten Messphase mindestens zwei Teil-Phasendifferenzbilder gebildet werden und bevorzugt in die Summierung eingehen.

4. Verfahren nach einem der vorangegangenen Ansprüche, wobei wobei die zeitliche Dauer der zweiten Messphase bevorzugt mindestens 50% der zeitlichen Dauer der ersten Messphase beträgt, bevorzugt mindestens 90%, weiter bevorzugt mindestens 110% und/oer wobei der zeitliche Abstand zwischen der Erzeugung aufeinander folgender Phasenbilder über die erste und zweite Messphase um maximal 20%, bevorzugt um maximal 10% des kürzesten zeitlichen Abstands schwankt und bevorzugt für alle Phasenbilder gleich groß ist.

5. Verfahren nach einem der vorangegangenen Ansprüche, wobei die Veränderung des Drucks in der zweiten Messphase schneller erfolgt als die Veränderung des Drucks in der ersten Messphase, wobei in der zweiten Messphase bevorzugt eine Schnellentlüftung oder Schnellbelüftung der Druckkammer erfolgt.

6. Verfahren nach einem der Ansprüche 1 bis 4, wobei die Veränderung des Drucks in der zweiten Messphase symmetrisch zur Veränderung des Drucks in der ersten Messphase erfolgt.

7. Verfahren nach einem der vorangegangenen Ansprüche, mit mehreren aufeinanderfolgenden ersten und zweiten Messphasen, wobei die aufeinanderfolgenden ersten und zweiten Messphasen einen periodischen Druckverlauf bilden und/oder die absoluten Druckveränderungen in mehreren aufeinander folgenden Messphasen gleich groß sind.

8. Verfahren nach einem der vorangegangenen Ansprüche, wobei die erste Messphase erst einsetzt, nachdem eine Druckveränderung gegenüber dem Ausgangsdruck in der Druckkammer vorgenommen wurde und/oder wobei die zweite Messphase endet, bevor der Druck in der Druckkammer auf den Ausgangsdruck zurückgegangen ist.

9. Verfahren nach einem der vorangegangenen Ansprüche, wobei mindestens ein Phasenbild sowohl in ein Teil-Phasendifferenzbild aus einer ersten Messphase als auch ein Teil-Phasendifferenzbild aus einer zweiten Messphase eingeht, wobei bevorzugt am Übergang zwischen zwei Messphasen ein Phasenbild erzeugt wird, welches in das letzte Teil-Phasendifferenzbild der vor dem Übergang liegenden Messphase und in das erste Teil-Phasendifferenzbild der nach dem Übergang liegenden Phase eingeht.

10. Verfahren nach einem der vorangegangenen Ansprüche, wobei in der ersten Messphase ein Unterdruck in der Druckkammer erzeugt wird, welcher bevorzugt in der zweiten Messphase wieder abgelassen wird.

11. Verfahren nach einem der vorhergehenden Ansprüche, wobei aus den Phasenbildern und/oder Teil-Phasendifferenzbildern und/oder dem Gesamt-Phasendifferenzbild eine Ganzkörperverformung eliminiert wird, und/oder wobei vor der Summierung eine Phasenfilterung der Teil-Phasendifferenzbilder erfolgt.

12. Verfahren nach einem der vorhergehenden Ansprüche, wobei die Phasenbilder aus einem einzigen Messbild erzeugt werden, und/oder wobei zur Erzeugung eines Teil-Phasendifferenzbildes ein räumlicher Phasenshift eingesetzt wird, und/oder wobei zur Erzeugung eines Messbildes eine Abbildungsoptik eingesetzt wird, welche eine Blende mit mindestens einer Öffnung, insbesondere einem Spalt, und bevorzugt zwei Öffnungen, insbesondere zwei Spalten aufweist, durch die eine räumliche Trägerfrequenz erzeugbar ist.

13. Verfahren nach einem der vorhergehenden Ansprüche, wobei die Veränderung des Drucks in der ersten und/oder zweiten Phase kontinuierlich erfolgt und/oder wobei die Aufnahme mindestens eines der Phasenbilder erfolgt, während der Druck verändert wird, und/oder wobei die Veränderung des Drucks während der Reifenprüfung kleiner als 50 mBar, bevorzugt kleiner als 40 mBar, weiter bevorzugt kleiner als 30 mBar, weiter bevorzugt kleiner als 20 mBar, weiter bevorzugt kleiner als 10 mBar ist.

14. Reifenprüfgerät zur interferometrischen Prüfung eines Reifens (1) mit einer Druckkammer (2), einer Vorrichtung (3, 4) durch welche der Druck in der Druckkammer (2) verändert werden kann, mindestens einem interferometrischen Messkopf (5) und einer Steuerung (6), welche so konfiguriert ist, dass sie ein Verfahren nach einem der vorangegangenen Ansprüche durchführt.

15. Steuerungssoftware für ein Reifenprüfgerät zur interferometrischen Prüfung eines Reifens mit einer Druckkammer (2) einer Vorrichtung (3, 4) durch welche der Druck in der Druckkammer (2) verändert werden kann, mindestens einem interferometrischen Messkopf (5) und einer Steuerung (6), wobei die Steuerungssoftware, läuft sie auf dem Reifenprüfgerät ab, das Reifenprüfgerät veranlasst, ein Verfahren nach einem der Ansprüche 1 bis 13 durchzuführen.

## Claims

1. Method for testing a tyre (1) by interferometry in a pressure chamber of a tyre testing device, including the steps of:
- producing phase images at different pressures in the pressure chamber (2),
- forming partial phase difference images between successive phase images and
- summing the partial phase difference images to form an overall phase difference image,
**characterized**
**in that** the pressure in the pressure chamber is changed in a first direction during a first measurement phase and there is a change in the pressure in the opposite direction during a second measurement phase, wherein at least one partial phase difference image from the first measurement phase and at least one partial phase difference image from the second measurement phase are included in the summation.

2. Method according to Claim 1, wherein the partial phase difference image or the partial phase difference images from the second measurement phase is or are included in the summation with an opposite sign.

3. Method according to Claim 1 or 2, wherein at least two partial phase difference images are formed, and preferably included in the summation, during the first measurement phase and/or the second measurement phase.

4. Method according to any one of the preceding claims, wherein the time duration of the second measurement phase is preferably at least 50% of the time duration of the first measurement phase, preferably at least 90%, more preferably at least 110%, and/or wherein the time interval between the generation of successive phase images over the first measurement phase and second measurement phase varies by at most 20%, preferably by at most 10% of the shortest time interval and wherein said time interval is preferably the same for all phase images.

5. Method according to any one of the preceding claims, wherein the change in the pressure during the second measurement phase takes place more quickly than the change in the pressure during the first measurement phase, wherein there preferably is quick venting or quick aerating of the pressure chamber during the second measurement phase.

6. Method according to any one of Claims 1 to 4, wherein the change in the pressure during the second measurement phase takes place in a symmetrical manner with respect to the change in the pressure during the first measurement phase.

7. Method according to any one of the preceding claims, including a plurality of successive first and second measurement phases, wherein the successive first and second measurement phases form a periodic pressure profile and/or the absolute pressure changes of a plurality of successive measurement phases have the same magnitude.

8. Method according to any one of the preceding claims, wherein the first measurement phase only commences after a change in pressure in relation to the initial pressure in the pressure chamber was undertaken and/or wherein the second measurement phase ends before the pressure in the pressure chamber has returned to the initial pressure.

9. Method according to any one of the preceding claims, wherein at least one phase image includes both a partial phase difference image from a first measurement phase and a partial phase difference image from a second measurement phase, wherein a phase image is preferably produced at the transition between two measurement phases, said phase image being included in the last partial phase difference image of the measurement phase lying before the transition and in the first partial phase difference image of the phase lying after the transition.

10. Method according to any one of the preceding claims, wherein negative pressure is produced in the pressure chamber during the first measurement phase, said negative pressure preferably being released again during the second measurement phase.

11. Method according to any one of the preceding claims, wherein a whole-body deformation is eliminated from the phase images and/or partial phase difference images and/or the overall phase difference image, and/or wherein the partial phase difference images are phase filtered prior to the summation.

12. Method according to any one of the preceding claims, wherein the phase images are produced from a single measurement image and/or wherein a spatial phase shift is used for producing a partial phase difference image and/or wherein an imaging optical unit is used to produce a measurement image, said imaging optical unit having a stop with at least one aperture, in particular one slit, and preferably two apertures, in particular two slits, by means of which a spatial carrier frequency is producible.

13. Method according to any one of the preceding claims, wherein the pressure change is continuous during the first phase and/or the second phase and/or wherein at least one of the phase images is recorded while the pressure is changed and/or wherein the change in the pressure during the tyre test is less than 50 mbar, preferably less than 40 mbar, further preferably less than 30 mbar, further preferably less than 20 mbar, further preferably less than 10 mbar.

14. Tyre testing device for testing a tyre (1) by interferometry, having a pressure chamber (2), a device (3, 4) by which the pressure in the pressure chamber (2) can be changed, at least one interferometric measuring head (5) and a controller (6) which is configured in such a way that it carries out a method according to any one of the preceding claims.

15. Control software for a tyre testing device for testing a tyre by interferometry, having a pressure chamber (2), a device (3, 4) by which the pressure in the pressure chamber (2) can be changed, at least one interferometric measuring head (5) and a controller (6), wherein the control software, when it runs on the tyre testing device, causes the tyre testing device to carry out a method according to any one of Claims 1 to 13.

## Revendications

1. Procédé d'essai interférométrique d'un pneumatique (1) dans une chambre de pression d'un appareil d'essai de pneumatique, le procédé comprenant les étapes suivantes :
- générer des images de phase à différentes pressions dans la chambre de pression (2),
- former des images de différence de phase partielle entre des images de phase successives et
- sommer des images de différence de phase partielle pour former une image de différence de phase totale,
**caractérisé en ce que**
dans une première phase de mesure, la pression dans la chambre de pression est modifiée dans une première direction et, dans une deuxième phase de mesure, la pression est modifiée dans la direction opposée, au moins une image de différence de phase partielle de la première et de la deuxième phase de mesure étant incluse dans la sommation.

2. Procédé selon la revendication 1, la ou les images de différence de phase partielle de la deuxième phase de mesure étant incluses dans la sommation avec le signe opposé.

3. Procédé selon la revendication 1 ou 2, au moins deux images de différence de phase partielle étant formées dans la première et/ou la deuxième phase de mesure et étant de préférence incluses dans la sommation.

4. Procédé selon l'une des revendications précédentes, la durée de la deuxième phase de mesure étant de préférence d'au moins 50 % de la durée de la première phase de mesure, de préférence d'au moins 90 %, plus préférablement d'au moins 110 % et/ou l'intervalle de temps entre les générations d'images de phase successives fluctuant sur les première et deuxième phases de mesure d'un maximum de 20 %, de préférence d'un maximum de 10 % de l'intervalle de temps le plus court et étant de préférence de la même dimension pour toutes les images de phase.

5. Procédé selon l'une des revendications précédentes, la variation de pression dans la deuxième phase de mesure étant effectuée plus rapidement que la variation de pression dans la première phase de mesure, une évacuation d'air rapide ou une amenée d'air rapide de la chambre de pression étant effectuée de préférence dans la deuxième phase de mesure.

6. Procédé selon l'une des revendications 1 à 4, la variation de pression dans la deuxième phase de mesure étant effectuée symétriquement à la variaton de pression dans la première phase de mesure.

7. Procédé selon l'une des revendications précédentes, comprenant une pluralité de première et deuxième phases de mesure successives, les première et deuxième phases de mesure successives formant une variation de pression périodique et/ou les variations de pression absolue dans une pluralité de phases de mesure successives sont de même dimension.

8. Procédé selon l'une des revendications précédentes, la première phase de mesure ne commençant qu'après qu'une variation de pression a été effectuée par rapport à la pression de sortie dans la chambre de pression et/ou la deuxième phase de mesure se terminant avant que la pression dans la chambre de pression ne soit retombée à la pression de départ.

9. Procédé selon l'une des revendications précédentes, au moins une image de phase étant incluse à la fois dans une image de différence de phase partielle d'une première phase de mesure et une image de différence de phase partielle d'une deuxième phase de mesure, une image de phase, qui est incluse dans la dernière image de différence de phase partielle de la phase de mesure située avant la transition et dans la première image de différence de phase partielle de la phase située après la transition, étant générée de préférence à la transition entre deux phases de mesure.

10. Procédé selon l'une des revendications précédentes, une pression négative, qui est de préférence abaissée à nouveau dans la deuxième phase de mesure, étant générée dans la première phase de mesure dans la chambre de pression.

11. Procédé selon l'une des revendications précédentes, une déformation du corps entier étant éliminée des images de phase et/ou des images de différence de phase partielle et/ou de l'image de différence de phase totale, et/ou un filtrage de phase des images de différence de phase partielle étant effectué avant la sommation.

12. Procédé selon l'une des revendications précédentes, les images de phase étant générées à partir d'une seule image de mesure, et/ou un déphasage spatial étant utilisé pour générer une image de différence de phase partielle, et/ou un système de reproduction optique étant utilisé pour générer une image de mesure, lequel système comporte un diaphragme comportant au moins une ouverture, en particulier une fente, et de préférence deux ouvertures, en particulier deux fentes, à travers lesquelles une fréquence porteuse spatiale peut être générée.

13. Procédé selon l'une des revendications précédentes, la variation de pression dans la première et/ou la deuxième phase étant effectuée en continu et/ou au moins une des images de phase étant enregistrée pendant la variation de la pression, et/ou la variation de pression pendant l'essai du pneumatique étant inférieure à 50 mBar, de préférence inférieure à 40 mBar, plus préférablement inférieure à 30 mBar, plus préférablement inférieure à 20 mBar, plus préférablement inférieure à 10 mBar.

14. Dispositif d'essai de pneumatique destiné à l'essai interférométrique d'un pneumatique (1), le dispositif comprenant une chambre de pression (2), un dispositif (3, 4) permettant de faire varier la pression dans la chambre de pression (2), au moins une tête de mesure interférométrique (5) et une commande (6) qui est conçue pour mettre en œuvre un procédé selon l'une des revendications précédentes.

15. Logiciel de commande d'un dispositif d'essai de pneumatique destiné à effectuer un essai interférométrique d'un pneumatique et comprenant une chambre de pression (2), un dispositif (3, 4) permettant de faire varier la pression dans la chambre de pression (2), au moins une tête de mesure interférométrique (5) et une commande (6), le logiciel de commande étant exécuté sur le dispositif d'essai de pneumatique et ordonnant au dispositif d'essai de pneumatique de mettre en œuvre un procédé selon l'une des revendications 1 à 13.
